# FASCICULE DE BREVET EUROPEEN

(11) **EP 3 616 337 B1**
(45) Date de publication et mention de la délivrance du brevet: **17.08.2022**
(21) Numéro de dépôt: 18712261.9
(22) Date de dépôt: 28.03.2018
(51) Int. Cl.: H04B 10/114, G04R 20/26, G04C 11/00, G04G 5/00, G04G 21/04

(54) **PROCEDE DE TRANSMISSION SYNCHRONE DE DONNEES D'UN APPAREIL ELECTRONIQUE VERS UNE MONTRE ELECTRONIQUE**
VERFAHREN ZUR SYNCHRONEN DATENÜBERTRAGUNG VON EINEM ELEKTRONISCHEN GERÄT AUF EINE ELEKTRONISCHE UHR
METHOD FOR SINCHRONOUSLY TRANSMITTING DATA FROM AN ELECTRONIC APPARATUS TO AN ELECTRONIC TIMEPIECE

(30) Priorité: 25.04.2017 EP 17167994
(43) Date de publication de la demande: 04.03.2020
(73) Titulaire: ETA SA Manufacture Horlogère Suisse, 2540 Grenchen (CH)
(72) Inventeur: BONNET, Thierry, 1205 Genève (CH)
(74) Mandataire: ICB SA
(86) Numéro de dépôt international: PCT/EP2018/057901
(87) Numéro de publication internationale: WO 2018/197142

(56) Documents cités:
- EP-A1- 2 903 187
- EP-A2- 1 968 215
- GB-A- 2 524 523
- US-A1- 2016 266 554
- US-A1- 2016 299 475

## Description

### DOMAINE TECHNIQUE

La présente invention se rapporte au domaine des montres électroniques. Elle concerne plus particulièrement un procédé de transmission de données d'un appareil électronique vers une montre électronique.

### ART ANTERIEUR

Les montres dites « connectées », aptes à communiquer avec un appareil électronique tel qu'un smartphone, se sont imposées ces dernières années dans le milieu horloger. Le réglage d'une telle montre peut s'effectuer manuellement, notamment via l'activation de boutons poussoirs, de couronnes et/ou de touches tactiles, ce qui est relativement contraignant pour l'utilisateur ou le service après-vente chargé du réglage.

Pour éviter ces inconvénients, il est maintenant possible de régler une montre électronique de façon automatique, en l'équipant de dispositifs supportant la technologie Bluetooth Low Energy ou une technologie de communication en champ proche. Cependant, ces dispositifs sont assez complexes à mettre en place et demandent à incorporer des moyens de communication spécifiques tant sur l'appareil électronique que sur la montre, notamment des antennes. Ils doivent également être certifiés ce qui occasionne un surcoût supplémentaire.

Dans la demande de brevet EP 3 211 491 A1, il a été proposé une nouvelle façon de transférer des données de réglage à une montre électronique à partir d'un appareil électronique, typiquement un smartphone, plus simple et moins onéreuse que les solutions précédemment citées. Pour cela, la montre comporte un phototransistor destiné à détecter des signaux lumineux en provenance d'une source lumineuse de l'appareil électronique. Ces signaux lumineux codent des données par l'intermédiaire d'une modulation à deux états : présence ou absence de lumière. Cependant ce type de modulation optique bipolaire présente l'inconvénient de ne permettre que des débits de transmission relativement faibles. D'autre part, la transmission ne peut être qu'asynchrone, et les systèmes d'exploitation des appareils électroniques ne permettent pas de garantir une parfaite stabilité de la fréquence d'émission. Les périodes d'émission risquent donc de ne pas être de durées identiques, ce peut être la cause d'erreurs dans la réception et le décodage.

On connaît également le document US 2016/299475 A1, qui décrit un procédé de transmission de données d'un appareil électronique vers une montre électronique, comportant les étapes suivantes :
- émettre une séquence de signaux lumineux par une source lumineuse de l'appareil électronique, ladite séquence correspondant à un codage des données à transmettre,
- détecter des niveaux d'intensité lumineuse successifs par une cellule solaire de la montre, de sorte à reconstituer la séquence,
- décoder la séquence afin de reconstituer les données.

### RESUME DE L'INVENTION

La présente invention a pour but de remédier aux inconvénients présentés dans la partie précédente, en proposant un procédé de transmission optique amélioré.

A cet effet, l'invention concerne un procédé de transmission de données d'un appareil électronique vers une montre électronique, ce procédé étant défini dans la revendication indépendante 1 annexée.

Le codage des données étant réalisé sous la forme de signaux lumineux à au moins quatre états, on dira que les signaux codent ces données par l'intermédiaire d'une modulation optique à au moins quatre niveaux, appelée plus simplement modulation optique multiniveaux. Par multi, on entendra donc au moins quatre.

Ce procédé présente l'avantage de pouvoir être mis en œuvre de manière majoritairement automatique, sans que l'utilisateur n'ait à effectuer de réglage complexe via des couronnes, boutons poussoirs ou touches tactiles par exemple. Naturellement, le procédé doit être amorcé, ce qui peut être réalisé soit manuellement via appui sur un bouton poussoir, soit automatiquement, par exemple via un système en veille par défaut qui se réveille à réception d'une certaine séquence lumineuse. La transmission automatisée de données entre l'appareil électronique et la montre électronique permet de faciliter grandement la programmation de la montre. Elle permet également d'éviter les erreurs ou les imprécisions résultant d'une configuration manuelle. Elle offre à l'utilisateur la possibilité d'utiliser l'interface plus conviviale de l'appareil électronique, typiquement une application d'un smartphone, pour sélectionner et configurer les données à transférer à la montre. Toutes sortes de données peuvent être transmises par ce moyen, y compris de courts messages, sous réserve des capacités d'affichage de la montre. Ainsi on pourra effectuer facilement la mise à l'heure, les changements d'heure, le réglage d'une alarme, le réglage du quantième, ou transmettre d'autres informations comme les phases de lune, les horaires et coefficients des marées, les horaires de couché et de lever du soleil, etc.

En outre, ce procédé présente l'avantage de ne pas nécessiter d'incorporer d'antennes de communication (onéreuses, encombrantes et parfois incompatibles avec des habillages métalliques) sur la montre ou l'appareil électronique, le système de communication optique entre la montre et l'appareil électronique n'étant constitué que d'une source lumineuse ponctuelle de type diode électroluminescente et d'un capteur optique de type phototransistor.

Enfin, le procédé selon l'invention est particulièrement avantageux en ce qu'il permet une transmission synchrone, comme cela est expliqué ci-après.

En effet, l'émission de signaux lumineux sur au moins quatre niveaux d'intensité lumineuse permet de transmettre un signal d'horloge en sus des données. Sur chaque période d'horloge, une partie des données (par exemple un ou plusieurs bits) est transmise avec la phase (état haut ou bas) de l'horloge. En particulier, lorsque l'horloge est à l'état haut, la partie de données est codée sur certains niveaux d'intensité lumineuse, alors que lorsque l'horloge est à l'état bas, ladite partie de données est codée sur d'autres niveaux d'intensité lumineuse. A l'aide de niveaux de seuils, il est donc possible pour la montre de reconstituer les données en tenant compte du signal d'horloge également transmis.

Ainsi, selon l'invention telle que revendiquée, l'ensemble d'au moins quatre niveaux d'intensité est divisé en une première partie et une deuxième 2. partie pour transmettre un signal d'horloge en sus des données, un signal lumineux sur deux de la séquence présentant un niveau d'intensité lumineuse appartenant à la première partie, l'autre signal sur deux présentant un niveau d'intensité lumineuse appartenant à la deuxième partie, chaque partie correspondant à un état du signal d'horloge.

Le procédé selon l'invention peut comprendre l'une ou une combinaison techniquement possible des caractéristiques suivantes.

Dans un mode de réalisation non limitatif, les niveaux d'intensité lumineuse de l'ensemble sont répartis régulièrement sur une échelle de luminosité.

Dans un mode de réalisation non limitatif, le procédé comporte une étape supplémentaire de génération d'un compte-rendu de transmission.

Dans un mode de réalisation non limitatif, l'étape de génération d'un compte-rendu de transmission comprend une émission d'un signal lumineux par une diode électroluminescente de la montre.

Dans un mode de réalisation non limitatif, l'étape de génération d'un compte-rendu de transmission comprend un positionnement des moyens d'affichage de la montre.

Dans un mode de réalisation non limitatif, le procédé comprend une étape supplémentaire d'analyse d'une image du cadran de la montre prise par une caméra de l'appareil électronique, suite au positionnement des moyens d'affichage de la montre.

Dans un mode de réalisation non limitatif, l'appareil électronique est portable, notamment de type smartphone ou tablette électronique.

Par « appareil électronique portable », on entend un appareil électronique, aussi appelé terminal utilisateur, capable d'être porté et transporté par un utilisateur, et d'être fonctionnel lors de son transport. C'est le cas par exemple d'un smartphone. Naturellement, les appareils nécessitant une alimentation secteur, par exemple les ordinateurs de bureau, sont exclus de cette définition. Les ensembles d'appareils, par exemple un ordinateur portable auquel un périphérique est connecté par liaison sans fil ou filaire sont également exclus de cette définition.

Ce procédé présente l'avantage de nécessiter très peu de matériel : un appareil portable de type smartphone avec une application mobile appropriée suffit à le mettre en œuvre. Le procédé ne requiert pas l'utilisation de matériel dédié tel qu'un capteur à brancher à un ordinateur, ni de matériel encombrant. N'importe quelle personne (par exemple un horloger) disposant d'un smartphone ayant l'application appropriée pourrait mettre en œuvre le procédé.

Dans un mode de réalisation non limitatif, la source lumineuse est une zone d'un écran d'affichage de l'appareil électronique.

Dans un mode de réalisation non limitatif, la source lumineuse est une diode électroluminescente servant également de flash pour l'appareil électronique.

### BREVE DESCRIPTION DES FIGURES

Les détails de l'invention apparaîtront plus clairement à la lecture de la description qui suit, faite en référence aux dessins annexés dans lesquels :
- la figure 1 représente une montre, vue côté cadran, recevant, par l'intermédiaire d'un phototransistor, un signal lumineux émis par une diode électroluminescente d'un smartphone aussi utilisée en tant que flash dudit smartphone, ledit smartphone étant vu côté dos
- la figure 2 représente une montre, vue côté fond, recevant, par l'intermédiaire d'un phototransistor, un signal lumineux émis par une portion d'un écran de smartphone, le phototransistor étant positionné en vis-à-vis de ladite portion, le smartphone étant vu côté écran
- la figure 3 représente des niveaux d'intensité lumineuse en fonction de phases d'une horloge, dans le cas d'une modulation optique synchrone à quatre niveaux d'intensité lumineuse
- la figure 4 représente des niveaux d'intensité lumineuse émis par une source lumineuse d'un appareil électronique portable, avant et après une étape de calibration du procédé selon un mode de réalisation de l'invention
- la figure 5 représente des étapes du procédé selon un mode de réalisation de l'invention.

### DESCRIPTION DETAILLEE

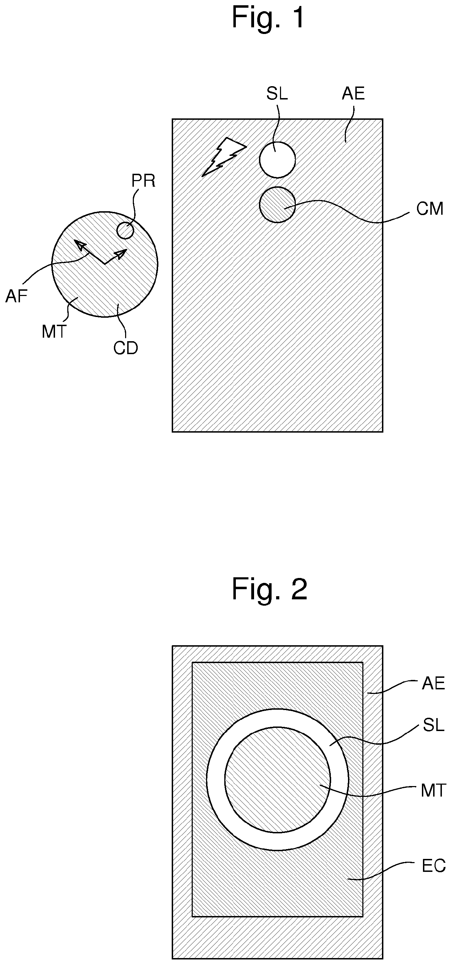

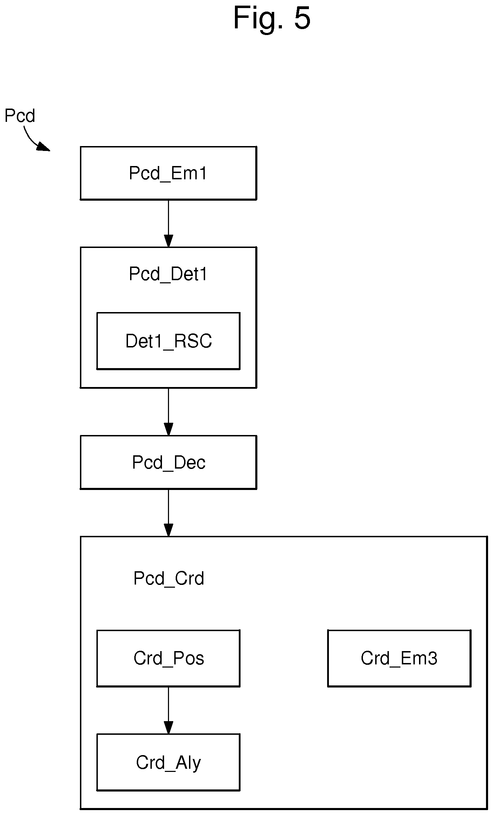

Les figures 1 et 2 représentent une montre électronique MT et un appareil électronique AE aptes à mettre en œuvre le procédé de transfert de données selon l'invention représenté à la figure 5. Plus particulièrement, la montre MT est équipée d'un phototransistor PR connecté à un microcontrôleur (non représenté) de la montre MT. Le procédé de transmission consiste à émettre (étape Pcd_Em1) une séquence de signaux lumineux par une source lumineuse SL de l'appareil électronique AE sur au moins quatre niveaux distincts d'intensité lumineuse, à recevoir (étape Pcd_Det1, Det1_Rsc) la séquence de signaux lumineux par le phototransistor PR de la montre MT, et à convertir (étape Pcd_Dec) la séquence reçue en signal exploitable.

Dans une première configuration représentée à la figure 1, le phototransistor PR est situé sous le cadran CD de la montre MT, en vis-à-vis d'une ouverture laissant passer la lumière. Dans une autre configuration, le phototransistor PR est situé du côté du fond de la montre MT qui est au moins partiellement transparent pour laisser passer la lumière ou qui possède une trappe amovible. Naturellement, de nombreuses autres configurations peuvent être envisagées.

Le transfert de données depuis l'appareil électronique AE s'effectue par l'intermédiaire de la source lumineuse SL, par exemple un flash ou un écran EC dudit appareil AE. Dans la configuration représentée à la figure 1, l'appareil électronique AE est un smartphone et l'émission des signaux lumineux est réalisée via le flash du smartphone qui constitue la source lumineuse. Le flash étant situé au dos de l'appareil il est possible d'utiliser l'écran EC de l'appareil AE pour gérer l'application de transfert à l'aide de l'écran EC du smartphone pendant les transferts de données tout en contrôlant visuellement les modifications apportées à l'affichage de la montre MT.

Dans la configuration représentée à la figure 2, l'appareil électronique AE est un smartphone et l'émission des signaux lumineux est réalisée via l'écran EC du smartphone. Plus précisément, l'écran EC comporte une zone en forme de disque, dont le niveau de luminosité est homogène, ladite zone constituant la source lumineuse SL. La montre MT est placée directement contre ou face à l'écran EC du smartphone, en vis-à-vis du disque lumineux. Dans ce cas, l'application doit être configurée avant d'effectuer le transfert et, si le cadran CD de la montre MT n'est pas visible, une étape de contrôle du transfert de données doit être effectuée après l'opération. Cette configuration présente l'avantage d'être moins sensible aux perturbations lumineuses extérieures que la configuration de la figure 1.

Dans une variante d'exécution de la configuration précédente, l'écran EC peut être séparé en deux zones afin de circonscrire la source lumineuse à l'une des zones de l'écran EC. La zone restante de l'écran EC est réservée à l'interface utilisateur de l'application contrôlant le transfert de données. La transmission de données et le contrôle de son exécution se trouvent ainsi facilités.

On note que l'appareil électronique AE représenté est de type portable, mais il pourrait alternativement être un périphérique connecté à un ordinateur de bureau, par exemple par liaison USB, ce périphérique comprenant une source lumineuse telle que décrite dans les paragraphes précédents (une diode électroluminescente ou une portion d'un écran du périphérique). Cette variante présente l'avantage de pouvoir accroitre la vitesse de modulation qui pourrait être limitée par les performances des appareils électroniques portables de type smartphone.

Le transfert de données peut être effectué à l'aide de différents types de modulation optique. Comme évoqué précédemment, une modulation bipolaire de type NRZ est facile à mettre en œuvre mais présente des performances limitées. Il est donc avantageux de profiter des possibilités des écrans ou des flashs des smartphones (ou plus généralement des écrans ou flashs d'appareils électroniques portables) pour réaliser une modulation optique multiniveaux. Les écrans et les flashs récents peuvent en effet généralement émettre sur au moins 4 niveaux d'intensité lumineuse distincts (dont un niveau peut par exemple correspondre à l'état « pas d'émission de lumière »).

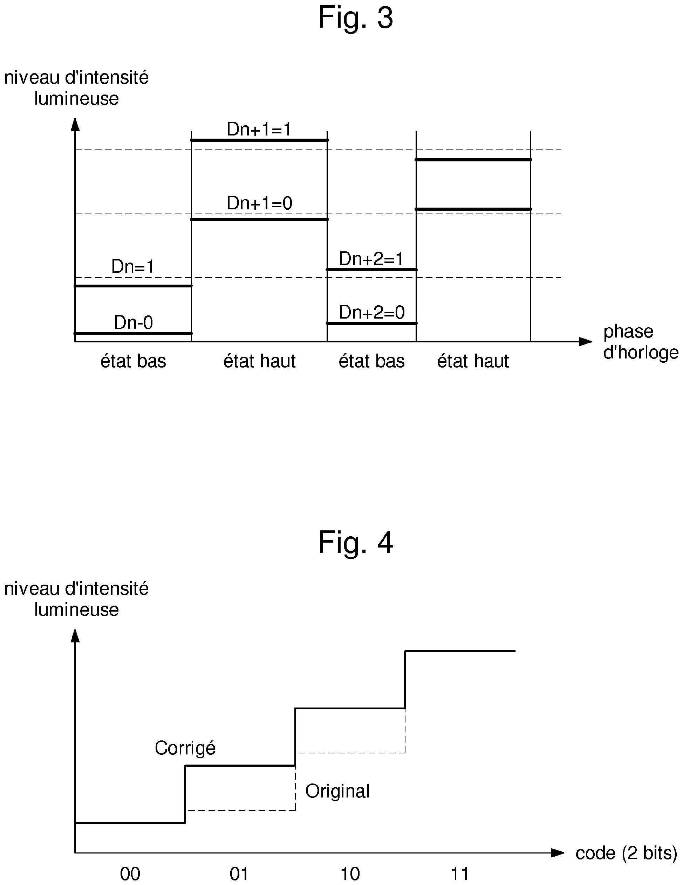

La modulation multiniveau synchrone selon l'invention permet de transmettre à chaque période d'horloge une partie des données (par exemple un bit) mais également la phase (état bas ou état haut) de l'horloge, tout ceci grâce à une seule et unique séquence de signaux lumineux. La figure 3 représente un exemple de modulation synchrone à quatre niveaux, qui permet à chaque phase d'horloge de transmettre un bit et ladite phase. Dans cet exemple, les phases n et n+2 correspondent à un état bas de l'horloge, et les phases n+1 et n+3 correspondant à un état haut de l'horloge. Sur un état bas de l'horloge, le bit à transmettre est codé sur les 2 niveaux d'intensité lumineuse les plus bas. Sur un état haut de l'horloge, le bit à transmettre est codé sur les 2 niveaux d'intensité lumineuse les plus hauts.

Selon un mode de réalisation du procédé selon l'invention, le procédé de transmission comporte une étape de calibration des niveaux d'intensité lumineuse émis par la source lumineuse de la montre MT. Ces niveaux sont calibrés de telle sorte qu'ils sont répartis régulièrement par rapport à une échelle de luminosité, c'est-à-dire de telle sorte que l'écart de luminosité entre deux niveaux les plus proches est constant. Cette étape permet d'optimiser la distinction des différents niveaux de luminosité afin d'éviter les erreurs de lecture de niveau du côté récepteur. Un exemple est représenté à la figure 4. Cette figure montre des niveaux de luminosité en fonction des données à coder, avant calibrage (courbe « original ») et après calibrage (courbe « corrigé »).

Dans un mode de réalisation, le procédé comporte une étape de génération d'un compte rendu de transmission (étape Pcd_Crd), le compte-rendu étant produit par la montre MT à destination de l'utilisateur ou de l'appareil électronique AE. Par exemple, à la fin d'une opération de transmission, des moyens d'affichage de la montre AF (par exemple les aiguilles des heures, minutes et secondes) de la montre peuvent être positionnées (étape Crd_Pos) de telle sorte à signifier la réussite ou l'échec de la transmission. Cette position particulière des moyens d'affichage AF peut être relevée par l'utilisateur qui est ainsi informé du déroulé de la transmission. Alternativement, l'appareil électronique AE peut, grâce à sa caméra CM et à des moyens d'analyse d'image, analyser (étape Crd_Aly) la position des moyens d'affichage AF de la montre MT et en déduire si la transmission a été effectuée correctement ou non. Il est également possible d'ajouter sur la montre MT une diode électroluminescente capable d'émettre (étape Crd_Em3), à la fin d'une transmission, une courte séquence destinée à être reçue par un phototransistor de l'appareil électronique AE. Suivant la séquence, l'appareil électronique AE peut déterminer si la transmission s'est déroulée correctement.

En conclusion, la transmission optique multiniveau synchrone entre un appareil électronique et une montre permet de réduire les risques d'erreurs de la transmission. Naturellement, l'homme du métier saura réaliser de multiples variations à partir des modes de réalisation présentés sans sortir du cadre des revendications.

## Revendications

1. Procédé (Pcd) de transmission de données d'un appareil électronique (AE) vers une montre électronique (MT), comportant les étapes suivantes :
- émettre (Pcd_Em1) une séquence de signaux lumineux par une source lumineuse (SL) de l'appareil électronique (AE), chaque signal présentant un niveau d'intensité lumineuse appartenant à un ensemble d'au moins quatre niveaux d'intensité lumineuse, ladite séquence correspondant à un codage des données à transmettre,
- détecter (Pcd_Det1) des niveaux d'intensité lumineuse successifs par un phototransistor (PR) de la montre (MT), de sorte à reconstituer la séquence,
- décoder (Pcd_Dec) la séquence afin de reconstituer les données,
l'ensemble d'au moins quatre niveaux d'intensité étant divisé en une première partie et une deuxième partie pour transmettre un signal d'horloge en sus des données, un signal lumineux sur deux de la séquence présentant un niveau d'intensité lumineuse appartenant à la première partie, l'autre signal sur deux présentant un niveau d'intensité lumineuse appartenant à la deuxième partie, chaque partie correspondant à un état du signal d'horloge.

2. Procédé (Pcd) de transmission selon l'une des revendications précédentes, les niveaux d'intensité lumineuse de l'ensemble étant répartis régulièrement sur une échelle de luminosité.

3. Procédé (Pcd) de transmission selon l'une des revendications précédentes **caractérisé en ce qu'**il comporte une étape supplémentaire de génération (Pcd_Crd) d'un compte-rendu de transmission.

4. Procédé (Pcd) de transmission selon la revendication précédente, l'étape de génération (Pcd_Crd) d'un compte-rendu de transmission comprenant une émission (Crd_Em3) d'un signal lumineux par une diode électroluminescente de la montre (MT).

5. Procédé (Pcd) de transmission selon la revendication 3, l'étape de génération (Pcd_Crd) d'un compte-rendu de transmission comprenant un positionnement (Crd_Pos) des moyens d'affichage (AF) de la montre (MT).

6. Procédé (Pcd) de transmission selon la revendication précédente, comprenant une étape supplémentaire d'analyse (Crd_Aly) d'une image du cadran (CD) de la montre (MT) prise par une caméra (CM) de l'appareil électronique (AE), suite au positionnement des moyens d'affichage (AF) de la montre (MT).

7. Procédé (Pcd) de transmission selon l'une des revendications précédentes, **caractérisé en ce que** l'appareil électronique (AE) est portable, notamment de type smartphone ou tablette électronique.

8. Procédé (Pcd) de transmission selon l'une des revendications précédentes, **caractérisé en ce que** la source lumineuse (SL) est une zone d'un écran d'affichage (EC) de l'appareil électronique (AE).

9. Procédé (Pcd) de transmission selon l'une des revendications 1 à 7, **caractérisé en ce que** la source lumineuse (SL) est une diode électroluminescente servant également de flash pour l'appareil électronique (AE).

10. Procédé (Pcd) de transmission selon l'une des revendications précédentes, **caractérisé en ce que**, lorsque l'horloge est à l'état haut, les données sont codées sur le ou les niveaux d'intensité lumineuse de la première partie, alors que lorsque l'horloge est à l'état bas, les données sont codées sur le ou les niveaux d'intensité lumineuse de la deuxième partie.

## Patentansprüche

1. Datenübertragungsverfahren (Pcd) eines elektronischen Geräts (AE) auf eine elektronische Uhr (MT), umfassend die folgenden Schritte:
- Senden (Pcd_Em1) einer Folge von Lichtsignalen durch eine Lichtquelle (SL) des elektronischen Geräts (AE), wobei jedes Signal eine Lichtintensitätsstufe aufweist, die zu einem Satz von mindestens vier Lichtintensitätsstufen gehört, wobei die Folge einer Codierung von zu übertragenden Daten entspricht,
- Erfassen (Pcd_Det1) der aufeinander folgenden Lichtintensitätsstufen durch einen Fototransistor (PR) der Uhr (MT), derart, dass die Folge wiederhergestellt wird,
- Decodieren (Pcd_Dec) der Folge, um die Daten wiederherzustellen,
wobei der Satz von mindestens vier Lichtintensitätsstufen in einen ersten Teil und einen zweiten Teil unterteilt ist, um ein Uhrensignal zusätzlich zu den Daten zu übertragen, wobei jedes zweite Lichtsignal aus der Folge eine Lichtintensitätsstufe aufweist, die zu dem ersten Teil gehört, und jedes andere zweite Signal eine Lichtintensitätsstufe aufweist, die zu dem zweiten Teil gehört, wobei jeder Teil einem Zustand des Uhrensignals entspricht.

2. Übertragungsverfahren (Pcd) nach einem der vorhergehenden Ansprüche, wobei die Lichtintensitätsstufen des Satzes auf einer Helligkeitsskala regelmäßig verteilt sind.

3. Übertragungsverfahren (Pcd) nach einem der vorhergehenden Ansprüche, **dadurch gekennzeichnet, dass** es einen zusätzlichen Schritt zum Erzeugen (Pcd_Crd) eines Übertragungsprotokolls umfasst.

4. Übertragungsverfahren (Pcd) nach dem vorhergehenden Anspruch, wobei der Schritt (Pcd_Crd) zum Erzeugen eines Übertragungsprotokolls das Senden (Crd_Em3) eines Lichtsignals durch eine Leuchtdiode der Uhr (MT) umfasst.

5. Übertragungsverfahren (Pcd) nach Anspruch 3, wobei der Schritt (Pcd_Crd) zum Erzeugen eines Übertragungsprotokolls eine Positionierung (Crd_Pos) von Anzeigemitteln (AF) der Uhr (MT) umfasst.

6. Übertragungsverfahren (Pcd) nach dem vorhergehenden Anspruch, das nach der Positionierung der Anzeigemittel (AF) der Uhr (MT) einen zusätzlichen Schritt (Crd_Aly) zum Analysieren eines Bildes des Zifferblatts (CD) der Uhr (MT), das durch eine Kamera (CM) des elektronischen Geräts (AE) aufgenommen wird, umfasst.

7. Übertragungsverfahren (Pcd) nach einem der vorhergehenden Ansprüche, **dadurch gekennzeichnet, dass** das elektronische Gerät (AE) tragbar ist und insbesondere vom Typ Smartphone oder elektronisches Tablet ist.

8. Übertragungsverfahren (Pcd) nach einem der vorhergehenden Ansprüche, **dadurch gekennzeichnet, dass** die Lichtquelle (SL) ein Bereich des Bildschirms (EC) des elektronischen Geräts (AE) ist.

9. Übertragungsverfahren (Pcd) nach einem der Ansprüche 1 bis 7, **dadurch gekennzeichnet, dass** die Lichtquelle (SL) eine Leuchtdiode ist, die außerdem als Blitzlicht für das elektronische Gerät (AE) dient.

10. Übertragungsverfahren (Pcd) nach einem der vorhergehenden Ansprüche, **dadurch gekennzeichnet, dass**, wenn sich die Uhr in hohem Zustand befindet, die Daten über die Lichtintensitätsstufe(n) des ersten Teils codiert werden, während die Daten, wenn sich die Uhr in niedrigem Zustand befindet, über die Lichtintensitätsstufe(n) des zweiten Teils codiert werden.

## Claims

1. Method (Pcd) for transmitting data from an electronic device (AE) to an electronic watch (MT), including the following steps:
- emitting (Pcd_Em1) a sequence of light signals with a light source (SL) of the electronic device (AE), each signal having a light-intensity level belonging to a set of at least four light-intensity levels, said sequence corresponding to a code of the data to be transmitted;
- detecting (Pcd_Det1) successive light-intensity levels with a phototransistor (PR) of the watch (MT), so as to reconstitute the sequence; and
- decoding (Pcd_Dec) the sequence in order to reconstitute the data,
the set of at least four intensity levels being divided into a first portion and a second portion to transmit a clock signal in addition to the data, one light signal in two of the sequence having a light-intensity level belonging to the first portion, the other signal on two having a light-intensity level belonging to the second portion, each portion corresponding to a state of the clock signal.

2. Transmitting method (Pcd) according to the preceding claim, the light-intensity levels of the set being regularly distributed over a brightness scale.

3. Transmitting method (Pcd) according to one of the preceding claims, **characterized in that** it includes an additional step (Pcd_Crd) of generating feedback on the transmission.

4. Transmitting method (Pcd) according to the preceding claim, the step (Pcd_Crd) of generating feedback on the transmission comprising emitting (Crd_Em3) a light signal with a light-emitting diode of the watch (MT).

5. Transmitting method (Pcd) according to Claim 3, the step (Pcd_Crd) of generating feedback on the transmission comprising positioning (Crd_Pos) displaying means (AF) of the watch (MT).

6. Transmitting method (Pcd) according to the preceding claim, comprising an additional step (Crd_Aly) of analysing an image of the dial (CD) of the watch (MT), this image being taken by a video camera (CM) of the electronic device (AE) following the positioning of the displaying means (AF) of the watch (MT).

7. Transmitting method (Pcd) according to one of the preceding claims, **characterized in that** the electronic device (AE) is portable, and in particular a smart phone or an electronic tablet.

8. Transmitting method (Pcd) according to one of the preceding claims, **characterized in that** the light source (SL) is a zone of a display screen (EC) of the electronic device (AE).

9. Transmitting method (Pcd) according to one of Claims 1 to 7, **characterized in that** the light source (SL) is a light-emitting diode that also serves as a flash for the electronic device (AE).

10. Transmitting method (Pcd) according to one of the preceding claims, **characterized in that**, when the clock is in the high state, the data is coded on the level or levels of light-intensity of the first portion, whereas when the clock is in the low state, the data is encoded on the level or levels of light-intensity of the second portion.
